# EUROPEAN PATENT SPECIFICATION

(11) **EP 3 448 173 B1**
(45) Date of publication and mention of the grant of the patent: **06.11.2019**
(21) Application number: 17717465.3
(22) Date of filing: 20.04.2017
(51) Int. Cl.: A23L 23/10, A23L 23/00

(54) **SAVOURY CONCENTRATE COMPRISING STRUCTURED AQUEOUS PHASE**
WÜRZKONZENTRAT MIT STRUKTURIERTER WÄSSRIGER PHASE
CONCENTRÉ DE SAVEUR COMPRENANT UNE PHASE AQUEUSE STRUCTURÉE

(30) Priority: 26.04.2016 WO PCT/EP2016/167161
(43) Date of publication of application: 06.03.2019
(73) Proprietor: Unilever N.V., 3013 AL Rotterdam (NL); Unilever PLC, London, Greater London EC4Y 0DY (GB)
(72) Inventor: KOPPERT, Remco, Johannes, 3133 AT Vlaardingen (NL); LEMMERS, Marc, 3133 AT Vlaardingen (NL); MELLEMA, Michel, 3133 AT Vlaardingen (NL)
(74) Representative: Tjon, Hon Kong Guno
(86) International application number: PCT/EP2017/059364
(87) International publication number: WO 2017/186558

(56) References cited:
- EP-A1- 3 031 333
- WO-A1-2012/097934
- WO-A1-2014/067839
- WO-A1-2015/091220
- JP-A- 2012 029 655
- US-A- 6 086 937
- US-A1- 2014 141 146

## Description

### TECHNICAL FIELD OF THE INVENTION

The present invention relates to a savoury concentrate, more particularly a savoury concentrate that can be used as a base for the preparation of soups, sauces, gravies etc. The savoury concentrate of the present invention is oil-continuous. The invention also relates to a process of preparing such a savoury concentrate.

### BACKGROUND OF THE INVENTION

Savoury concentrates are well-known in the art. These concentrates provide a convenient way of preparing, for instance, a soup or a sauce by mixing the concentrate with aqueous liquid. Examples of savoury concentrates include dry concentrates, such a dry soup and bouillon cubes, and liquid concentrates such as condensed soups and more recently in gelled forms.

WO 2012/097934 describes a semi-solid food concentrate in the form of a gel or a paste comprising:
- a salt-sensitive gum,
- salt in an amount sufficient to keep the salt-sensitive gum in a salted-out state,
- a salt-stable structuring material in an amount effective to provide a semi-solid food concentrate,
- water,
which semi-solid food concentrate, after dilution in an aqueous liquid, the aqueous liquid being water, can result in a ready-to-eat end product comprising:
- from 0.1 to 2.5 wt% of salt,
- from 0.01 wt% to 3.5 wt% of a salt-sensitive gum.

WO 2014/067839 describes a food concentrate in the form of a semi-solid gel comprising:
- water
- from 10 wt% to 40 wt% of sodium salt and potassium salt taken together, based on the weight of the total water content of the food concentrate, calculated as ((weight of sodium salt + weight of potassium salt) / (weight of sodium salt + weight of potassium salt + weight of total water content))*100 (in %);
- iota-carrageenan, wherein the iota-carrageenan is dissolved in the water;
wherein the ratio of (Na⁺ cations/ (Na⁺ cations + K⁺ cations))*100 (in %) is from 40 to 90 wt%.

Aqueous gels such as those described in WO 2012/097934 and WO 2014/067839 by definition are not oil-continuous as they are shaped by gelling agents that form a continuous network to structure the water phase. Such aqueous gel products have the disadvantage that the product needs to set in a relatively expensive, heat-resistant tub-like packaging to solidify. In addition, to prepare gel products the flavouring ingredients are typically heated together with the gelling agents which may deteriorate the heat sensitive flavour compounds. The processing line for gels is more complex as before filling the product needs to be maintained in a liquid state which is only possible if it is maintained at a sufficiently high temperature to keep it from gelling. This simmering may improve some flavours but may have a further negative effect on any heat sensitive flavour compounds. In addition, the product directly after filling should be handled with care to allow the gel to set. This adds more complexity to the industrial processing line. In contrast, paste-like products may have the advantage that these can be processed without the need to elevate temperatures for extended periods and can be packaged in relatively cost effective sachets, and usually do not require elevated temperatures before or special care after filling. Another advantage of a paste-like product, as opposed to a shape-stable elastic gel, is that it can be squeezed out of a pouch.

Savoury concentrates in the form of ambient stable pastes are known.

US 6,376,004 describes soup- or sauce base, comprising (in percentages by weight):
- fat or oil, in an amount of 5-65%
- starch-based thickener, in an amount of 1-30%
- water, in amount of 10-55%
- egg-yolk based emulsifier, in an amount of 0.5-10%
- at least one water-activity-lowering component
- flavouring composition, in an amount of 1-35%,
- optionally acids
wherein the amount of the water-activity-lowering component(s) is such that the composition has a water activity of below 0.92 and wherein salt and starch are present in a ratio of at least 1:0.5 and at most 1:7

Typically ambient stable pastes are virtually water-free and largely consist of fat, salt, sugars, herbs and spices. A disadvantage associated with the latter type of ambient stable pasty concentrates is the presence of clearly perceptible particles of crystalline salt and/or crystalline sugar. These particles are noticeable when a consumer pushes the concentrate with his fingers out of a pouch. Furthermore, the fat content of pasty concentrates is sometime undesirably high.

Sauce base compositions that are preferably fat-continuous are disclosed in US 6 086 937.

### SUMMARY OF THE INVENTION

The inventors have developed an ambient stable savoury concentrate that can suitably be used as a base for the preparation of, for instance, soups and sauces. The savoury concentrate of the present invention contains a substantial amount of salt, but exhibits a reduced tendency to form particles of crystalline salt.

The savoury concentrate of the present invention is oil-continuous and comprises:
- 24-85 wt.% of fat by weight of the total concentrate, said fat having a solid fat content at 20°C (N₂₀) of at least 2wt% (the solid fat is expressed as wt% by weight of the total amount of fat in the savoury concentrate);
- 8-50 wt.% of water by weight of the total concentrate;
- 0.1-20wt% of water structuring agent by weight of the amount of water in the concentrate;
- 0.2-3 mol per 100 g of water of alkalimetal cation selected from Na⁺, K⁺ and combinations thereof;
- 0.2-3 mol chloride anion per 100 g of water;
wherein fat and water are present in a weight/weight ratio fat to water of at least 2:3, preferably of at least 3:4.

The savoury concentrate of the present invention may suitably be packaged in, for instance, a pouch or a sachet. The packaged concentrate is shelf-stable and can safely be stored at ambient temperature for up to several months. Not only is the savoury concentrate microbiologically stable for several months, it also physically stable in that it does not exhibit significant syneresis or oil exudation during storage at ambient temperature.

The invention also provides a process of preparing the aforementioned savoury concentrate, said process comprising the successive steps of:
- providing a structured aqueous composition containing 0.1-20% of water structuring agent by weight of water in the concentrate;
- mixing the structured aqueous composition with fat and optional further components.

### DETAILED DESCRIPTION OF THE INVENTION

The term "fat" as used herein refers to glycerides selected from triglycerides, diglycerides, monoglycerides, phosphoglycerides and combinations thereof. The fat can be liquid, solid or semi-solid at ambient temperature (20 °C).

The term "water structuring agent" as used herein refers to biopolymer materials that are capable of substantially increasing the viscosity of aqueous liquids. Examples of water structuring agents include thickeners and gelling agents. Native, non-gelatinized starch is not a water structuring agent, but pregelatinized starch and maltodextrin are starch derived components that are water structuring agents.

The "alkalimetal cation" in the savoury concentrate may be part of a non-dissociated salt (e.g. NaCl or KCl), or it may be contained in the savoury concentrate in dissolved, dissociated form. At least a part of the alkalimetal cation contained in the savoury concentrate is present in dissolved, dissociated form.

Likewise, "chloride anion" may be present in the savoury concentrate as part of a non-dissociated salt or in dissolved, dissociated form. Also at least a part of the chloride anion in the savoury concentrate is contained therein in dissolved, dissociated form.

The term "emulsion" as used herein refers to a mixture that comprises a fat phase and an aqueous phase. The emulsion may additionally contain solid particles such as, for instance, herbs and spices.

Whenever reference is made herein to water content, unless indicated otherwise, said water content includes unbound (free) as well as bound water.

The solid fat content of fat at 20°C (N₂₀) or at other temperatures can suitably be determined using the method described in Animal and vegetable fats and oilsDetermination of solid fat content by pulsed NMR -- Part 1: Direct method - ISO 8292-1:2008.

The savoury concentrate according to the present invention is an edible product. Consequently, also the ingredients of the savoury concentrate are all edible ingredients.

The savoury concentrate of the present invention preferably has a pasty, semi-solid consistency, i.e. unlike a liquid. Typically, the savoury concentrate has a firmness of 20-2,000 g, more preferably of 30-1,000 g, even more preferably of 50-500 g and most preferably of 60-350 g. The firmness of the savoury concentrate is measured using the method described below in the Examples.

The savoury concentrate of the present invention preferably has a consistency that allows it to be squeezed out of a pouch. The squeezability of the savoury concentrate is determined by the extrusion test method that is described below in the Examples. Typically, the savoury concentrate can be extruded in this method with a steady-state force between 100 and 10,000 g, more preferably between 200 and 8,000 g, even more preferably between 500 and 6,000 g and most preferably between 700 and 3,000 g. According to a particularly preferred embodiment, the savoury concentrate does not exhibit phase separation (syneresis or oil exudation) when it is extruded with such a steady-state force.

The oil continuous savoury concentrate of the present invention can be a water-in-oil emulsion or a bi-continuous emulsion. Most preferably, the savoury concentrate is a water-in-oil emulsion.

According to another preferred embodiment, the savoury concentrate is not a gel product with a jelly consistency.

In one embodiment of the present invention, the savoury concentrate is a water-in-oil emulsion having a conductivity of less than 200 µS/cm, more preferably of less than 100 µS/cm and most preferably of less than 50 µS/cm.

In another embodiment, the savoury concentrate is a bi-continuous emulsion having a conductivity of at least 1,000 µS/cm, more preferably of at least 2,000 µS/cm and most preferably of at least 4,000 µS/cm.

The savoury concentrate of the present invention can be produced as a stable emulsion without the need of using an emulsifier. Accordingly, in a preferred embodiment, the savoury concentrate does not contain an added emulsifier in the form of a fatty acid ester selected from the group of monoglycerides, diglycerides, phosphoglycerides, mono- and diacetyl tartaric acid esters of mono- and diglycerides of fatty acids, acetic acid esters of mono and diglycerides of fatty acids, lactic acid esters of mono and diglycerides of fatty acids, citric acid esters of fatty acids, stearoyl-2-lactylate, polyglycerol esters of fatty acids, propane-1,2-diol esters of fatty acids, sucrose fatty acid esters, sorbitan fatty acid ester, polyglycerol polyricinoleate and combinations thereof.

The combination of fat and water typically represents at least 40 wt.% of the savoury concentrate by weight of the total concentrate. More preferably the combination of fat and water constitutes at least 50 wt.%, most preferably 52-75 wt.% of by weight of the total concentrate.

Fat and water are preferably present in the savoury concentrate in a weight/weight ratio fat to water of at least 3:4, more preferably of at least 1:1 and most preferably of 1.2:1 to 4:1.

The fat content of the savoury concentrate preferably is in the range of 26-75 wt.%, more preferably in the range of 28-65 wt.% and most preferably in the range of 30-55 wt.% by weight of the total concentrate.

The fat component of the savoury concentrate contains solid fat at ambient temperature (20°C). The solid fat contributes to the viscosity of the concentrate and to the stability of the emulsion. The fat contained in the savoury concentrate preferably has a solid fat content at 20°C (N₂₀) of at least 5% . Even more preferably the fat has a solid fat content at 20°C (N₂₀) in the range of 10-50%, most preferably in the range of 12-35% (the solid fat is expressed as wt% by weight of the total amount of fat in the savoury concentrate).

The fat in the savoury concentrate typically has a solid fat content at 35°C (N₃₅) of less than 30%, more preferably of less than 15% and most preferably of less than 10%.

The SAFA content of the fat that is employed in the savoury concentrate preferably does not exceed 60% by weight of the total amount of fatty acids. More preferably, said SAFA content does not exceed 40 wt.%, most preferably it does not exceed 20 wt.% expressed as wt% by weight of the total amount of fat in the savoury concentrate.

According to a preferred embodiment, the fat in the savoury concentrate contains at least 50 wt.% vegetable oil, more preferably at least 80 wt.% of vegetable oil expressed as wt% by weight of the total amount of fat in the savoury concentrate. Examples of vegetable oils that may be employed include sunflower oil, soybean oil, rapeseed oil, cottonseed oil, maize oil, olive oil, palm oil, palm kernel oil, coconut oil, fractions of these oils and combinations thereof. Also vegetable oils or vegetable oil blends that have been modified by hydrogenation or interesterification may be employed as components of the fat that is in contained in the savoury concentrate.

The savoury concentrate typically contains at least 2%, more preferably at least 5% and most preferably 8-50% by weight of the fat of a fat having a melting point above 20°C weight of the total savoury concentrate. Examples of such fats include palm oil, palm kernel oil, coconut oil, higher melting fractions of these vegetable oils, hydrogenated vegetable oils and combinations thereof. The fat component of the savoury concentrate may suitably be composed of a blend of one or more liquid vegetable oils (e.g. sunflower oil or soybean oil) and a high melting fat component (e.g. palm oil or fully hydrogenated rapeseed oil).

The water content of the savoury concentrate typically lies in the range of 10-45 wt.% of water. More preferably, the water content of the concentrate is in the range of 12-42 wt.%, most preferably of 15-35 wt.% expressed as wt% by weight of the savoury concentrate. The term "water" refers to the total amount of water present in the concentrate. Ingredients like the structuring agent are expressed by the amount of water. This includes both water added as such or part of an ingredient like the moisture in starch if used. This is for example calculated in case of the structuring agents as: (weight of structuring agent/(weight of water + weight of structuring agent))*100%.

The water activity of the savoury concentrate typically lies in the range of 0.5 to 0.9. More preferably, the savoury concentrate has a water activity in the range of 0.55 to 0.85, most preferably in the range of 0.60 to 0.80.

The concentration of water structuring agent in the savoury concentrate preferably is in the range of 0.3-15% by weight of water. More preferably, said concentration is in the range of 0.5-10%, even more preferably in the range of 0.7-8%, and most preferably of 1-5% by weight of water.

The water-structuring agent that is employed in the savoury concentrate is preferably selected from the group of agar, pectins, xanthan gum, gellan gum, galactomannans, glucomannans, gelatins, cellulose fibres, maltodextrins, inulins and combinations thereof. Examples of galactomannans that can be employed include locust bean gum, tara gum and guar gum. Konjac gum is an example of a glucomannan.

According to a particularly preferred embodiment, the water-structuring agent is selected from xanthan gum, galactomannans, agar, pectin, gellan gum, gelatins, cellulose fibres and combinations thereof.

In accordance with one embodiment of the present invention, the savoury concentrate contains 0.4-10 %, more preferably 0.5-8 % and most preferably 1-5% by weight of water of a combination of xanthan gum and locust bean gum. The combination of xanthan gum and locust bean preferably contains xanthan gum and locust bean gum in a weight/weight ratio that lies in the range of 1:4 to 4:1.

In accordance with another embodiment, the savoury concentrate contains 0.4-10%, more preferably 0.5-8% and most preferably 1-5% by weight of water of agar.

In accordance with a further embodiment, the savoury concentrate contains 0.4-10%, more preferably 0.5-8% and most preferably 1-5% by weight of water of pectin.

In accordance with another embodiment, the savoury concentrate contains 0.2-10%, more preferably 0.4-8% and most preferably 1-5% by weight of water of gellan gum.

In accordance with another embodiment, the savoury concentrate contains 0.2-10%, more preferably 0.4-8% and most preferably 1-5% by weight of water of cellulose fibres.

The % of the structuring agents above is expressed as wt% by weight of the amount of water in the concentrate.

The savoury concentrate of the present invention typically contains a substantial amount of added salt in the form of sodium chloride and/or potassium chloride. Due to the presence of a significant amount of water in the concentrate, a substantial fraction of said salt is dissolved at ambient temperature and is thus contained in the concentrate in dissociated form.

Preferably, the savoury concentrate contains 0.4-2.5 mol per 100 g of water, more preferably 0.5-2 mol per 100 g of water of alkalimetal cation selected from Na⁺, K⁺ and combinations thereof.

Expressed differently, the savoury concentrate preferably contains 0.05-0.5 mol per 100 g of concentrate, more preferably 0.1-0.4 mol per 100 g of concentrate of alkalimetal cation selected from Na⁺, K⁺ and combinations thereof.

The chloride anion content of the savoury concentrate preferably lies in the range of 0.4-2.5 mol per 100 g of water, more preferably of 0.5-2 mol per 100 g of water. Per 100 g of concentrate, the savoury concentrate preferably contains 0.05-0.5 mol, more preferably 0.1-0.4 mol of chloride anions.

Besides fat, water, water structuring agent and salt, the savoury concentrate may suitably contain a wide range of other ingredients such as sugars, monosodium glutamate, native starch, flour, fat, herbs, spices, vegetable pieces, meat extracts and colorants.

According to a preferred embodiment, the savoury concentrate contains 0-30 wt%, more preferably 1-20 wt.% and most preferably 1.5-15 wt.% of native starch by weight of the total concentrate. Here the term "native starch" refers to non-gelatinized starch. The term native starch encompasses, for instance, heat moisture treated starches and annealed starches.

In another advantageous embodiment, the savoury concentrate contains 0.1-20 wt.%, more preferably 1-15 wt.% of taste contributing components selected from glutamic acid, 5'-ribonucleotides, sucrose, glucose, fructose, lactose, lactic acid, citric acid, acetic acid and combinations thereof, by weight of the total concentrate.

According to a particularly preferred embodiment, the savoury concentrate comprises at least 0.2 wt.%, more preferably at least 0.5 wt.% by weight of the total concentrate of dry matter from tissue-based food particles having a mesh size in the range of 0.1-10 mm, said tissue-based food particles containing one or more edible materials selected from vegetables, herbs, spices, fruit, nuts, grains, meat and combinations thereof.

Another aspect of the invention relates to a process of preparing a savoury concentrate as defined herein before, said process comprising the successive steps of:
- providing a structured aqueous composition containing 0.1-20wt%, preferably 0.3-15 wt.% of water structuring agent by weight of water in the concentrate; and
- mixing the structured aqueous composition with fat and optional further components.

In one embodiment of the present process the structured aqueous composition that is mixed with the fat and the optional further components is a gelled aqueous phase. Preferably, said gelled aqueous phase is subjected to shear before it is mixed with the fat and the optional further components. By shearing the gelled phase before mixing it with the other components, a so called sheared gel can be prepared that can easily be blended with the fat and the other ingredients. With a votator this results in a slurry of microgels. It is particularly easy to disperse the sheared gel throughout the fat and to thereby create a water-in-oil emulsion.

In another embodiment of the aforementioned preparation process the structured aqueous composition that is mixed with the fat and the optional further components contains 0.2-10 wt.%, more preferably 0.5-6 wt.%, most preferably 1-4 wt.% of cellulose fibres by weight of water in the concentrate.

The structured aqueous composition that is mixed with the fat and the optional further components preferably contains alkalimetal cation selected from Na+, K+ and combinations thereof, and chloride anion.

The structured aqueous composition that is mixed with the fat and the optional further components preferably contains taste contributing components selected from glutamic acid, 5'-ribonucleotides, sucrose, glucose, fructose, lactose, lactic acid, citric acid, acetic acid and combinations thereof.

Examples of optional further components with can be mixed with the structured aqueous composition in the present process include tissue-based food particles having a mesh size in the range of 0.1-10 mm, said tissue-based food particles containing one or more edible materials selected from vegetables, herbs, spices, fruit, nuts, grains, meat and combinations.

Preferably the fat has a temperature of at most 40 °C, preferably at most 30 °C when the structured aqueous phase is mixed with the fat phase.

The savoury concentrate that is obtained by the present process is preferably filled into a pouch or a sachet.

Yet another aspect of the present invention relates to the use of the savoury concentrate as defined herein before in the preparation of a ready-to-eat food product, said use comprising combining 1 part by weight of the savoury concentrate with 1-40 parts by weight of aqueous liquid. Examples of ready-to-eat products that can be prepared in this manner include soups, sauces, gravies and bouillons.

According to one embodiment the savoury concentrate is mixed with hot aqueous liquid having a temperature of at least 50°C.

In accordance with another embodiment, the savoury concentrate is mixed with cold water having a temperature of less than 30°C and the resulting mixture is subsequently heated to a temperature in excess of 70°C.

Preferably, the present use comprises mixing 1 part by weight of the savoury concentrate with 4-20 parts by weight of aqueous liquid.

The aqueous liquid that is mixed with the savoury concentrate typically contains at least 70 wt.%, more preferably at least 80 wt.% of water.

The invention is further illustrated by the following non-limiting examples.

### EXAMPLES

### Example 1

Seven different savoury concentrates were prepared on the basis of the recipes shown in Table 1

**Table 1**

| | **1** | **2** | **3** | **4** | **5** | **A** | **B** |
|---|---|---|---|---|---|---|---|
| Fat blend ¹ | 53.1 | 33.3 | 31.0 | 29.7 | 27.4 | 53.1 | 33.3 |
| NaCl | 6.8 | 4.2 | 3.9 | 3.8 | 3.5 | 6.8 | 4.2 |
| KCl | 9.0 | 5.7 | 5.3 | 5.1 | 4.6 | 9.0 | 5.7 |
| Sugar | 8.5 | 5.3 | 5.0 | 4.7 | 4.4 | 8.5 | 5.3 |
| Native starch ² | 0.0 | 2.0 | 8.8 | 12.7 | 19.5 | 0.0 | 2.0 |
| Seasoning mix ³ | 0.0 | 20.5 | 19.1 | 18.3 | 16.9 | 0.0 | 20.5 |
| Herbs and vegetable pieces ⁴ | 0.0 | 0.5 | 0.4 | 0.4 | 0.4 | 0.0 | 0.5 |
| Xanthan + locust bean gum solution ⁵ | 22.6 | 28.5 | 26.5 | 25.3 | 23.3 | | |
| Water | | | | | | 22.6 | 28.5 |
| | | | | | | | |
| mol Na⁺ + K⁺ per 100 g water | 1.1 | 0.6 | 0.6 | 0.6 | 0.6 | 1.0 | 0.6 |

| | | | | | | | |
|---|---|---|---|---|---|---|---|
| ¹ 75 wt.% sunflower oil and 25 wt.% palm oil stearin (IV = 14) ² A mixture of potato starch and rice flour in a ratio of 1 : 2.5. ³ Contains powdered dry herbs and spices ⁴ A mixture of dried basil and parsley ⁵ Solution contains 2 wt.% of combined xanthan gum and locust bean gum in a 1:1 ratio. | | | | | | | |

The savoury concentrates were prepared using the following procedure:
- The fat blend was prepared by mixing sunflower oil and palm oil stearin in a 3:1 ratio at 85 °C. The mixture was then rapidly cooled in a scraped surface heat exchanger.
- The structured aqueous phase was prepared as follows: 1 wt% of xanthan gum powder and 1 wt% of locust bean gum powder were added to water of room temperature. The water and powders were mixed in a Thermomix (Vorwerk) applying mixing speed 3, while heating the water and gums mixture to at least 85 °C (temperature set to 90 °C). This hot aqueous mixture was transferred to a double walled vessel which was temperature controlled at 85 °C, from which the hot solution was pumped into a surface scraped heat exchanger. The pump speed was set to deliver a throughput of 39 g/min, the SSHE was set to rotate at 800 rpm at a temperature of 8 °C, leading to a sheared gel evacuation temperature of around 15 °C. The resulting sheared gel was collected, stored in the fridge and used within 24 hours.
- To prepare the final paste, first all the dry powders were weighed and then mixed together for about 1 minute until homogeneous in a Kenwood (type Chef classic or Chef premiere) kitchen machine, using the K-beater mixing tool. Next, about half of the fat was added and stirred for 2 minutes at speed 2 applying the K-beater. The other half of the fat was added, and again the mix was stirred for 2 minutes at speed 2 applying the K-beater. To this fat/powder mix, the structured aqueous phase (sheared gel) was added and stirred for at least 2 minutes at speed 2 applying the K-beater, until homogeneous. The final paste was stored at room temperature in vials and sachets for further studies.

In examples 1A and 1B, tap water was added instead of sheared gel, when making the final paste.

The phase stability of the savoury concentrates so obtained was evaluated visually after two weeks' of storage. The presence of hard crystal particles was assessed by compressing and rubbing the savoury concentrate between fingers. The firmness and squeezability of the savoury concentrates were assessed using the protocols described below.

The squeezability of the pastes was measured using a texture analyser from Microstable Systems, model TA XT2, operating a 30 kg load cell. To measure squeezability the Forward Extrusion Rig accessories kit was used (product code: HDP/FE). The pastes were loaded into the cylindrical sample container, having placed the pot base insert of 10 mm diameter. The piston disc pushes the paste through the hole and the required force is recorded. Typically, the force increases first, after which a relatively constant force is reached. This relatively constant force can be considered as a steady-state extrusion force. As measure of squeezability this steady-state extrusion force is averaged over an extrusion distance of at least 10 mm, or equivalent over 10 seconds time, based on the generated data.

The detailed measurement settings are:

| | |
|---|---|
| Method: | Return to start |
| Pre-test speed: | 1 mm/s |
| Test speed: | 1 mm/s |
| Return speed: | 10 mm/s |
| Trigger force: | 40 g |
| Data acquisition rate: | 200 points per second |

A paste was rated as squeezable if it could be extruded through the hole without phase separating, e.g. the oil pressed out of the paste, and if the steady-state force needed for the extrusion of the paste was between 100 and 10,000 g.

The firmness of the pastes was measured using a texture analyser from Microstable Systems, model TA XT2, operating a 30 kg load cell. A plunger (Delrin probe) was mounted with the following characteristics:

| | |
|---|---|
| • diameter | 0.5 inches, corresponding to 12.7 mm |
| • height | 35 mm |
| • flat bottom and wall surface, sharp edges, plastics material | |

For optimal reproducibility, the samples were all be measured in the same type of container. In this analysis, plastic (PP) containers were used with the following dimensions:

| | |
|---|---|
| • bottom diameter: | 4.9 cm |
| • top diameter: | 5.2 cm |
| • height of the container: | 6.3 cm |

The applied filling height was 5 cm.

Measurements were done two weeks after preparation of the samples which had been stored at room temperature. The TA-parameter measurement settings were:

| | |
|---|---|
| • Method description: | Return to start |
| • Pre-test speed: | 1 mm/s |
| • Test speed: | 0.5 mm/s |
| • Return speed: | 10 mm/s |
| • Target distance: | 15 mm |
| • Trigger force (auto): | 0.5 g |

Data recording was stopped at target. The shown force values (in grams) were taken from the recorded data at 10 mm penetration depth.

Conductivity was determined using a WTW LF538 conductivity meter combined with a WTW Tetracon 325 probe. Conductivity was determined by inserting the probe into the sample. The steady state values are reported. Local tap water has a conductivity of 300 µS/cm.

Water activity values were determined by a Novasina LabMaster-aw.

The outcome of the aforementioned evaluations are summarized in Table 2 (n.a. = not assessed).

**Table 2**

| | **1** | **2** | **3** | **4** | **5** | **A** | **B** |
|---|---|---|---|---|---|---|---|
| Oil exudation | No | No | No | No | No | No | No |
| Syneresis | No | No | No | No | No | Yes | Yes |
| Firmness (in g) | 68 | 108 | 137 | 149 | 158 | n.a. | n.a. |
| Squeezable ¹ | 1,050 | 773 | 946 | 1,935 | 2,025 | n.a. | n.a. |
| Hard particles ² | 2 | 1 | 1 | 1 | 1 | n.a. | n.a. |
| Water activity | 0.70 | 0.75 | 0.76 | 0.75 | 0.76 | n.a. | n.a. |
| Conductivity (µS/cm) | 0.4 | 4.7 | 1.0 | 0.7 | 1.0 | n.a. | n.a. |

| | | | | | | | |
|---|---|---|---|---|---|---|---|
| ¹ Measured as steady state forward extrusion force (in g) ² Scored on a scale of 0-5. Score 5 means many perceptible hard particles. Score 0 means no perceptible hard particles | | | | | | | |

### Example 2

Five different savoury concentrates were prepared on the basis of the recipes shown in Table 3.

**Table 3**

| | **1** | **2** | **3** | **A** | **B** |
|---|---|---|---|---|---|
| Fat blend ¹ | 33.3 | 33.3 | 33.3 | 33.3 | 33.3 |
| NaCl | 4.2 | 4.2 | 4.2 | 4.2 | 4.2 |
| KCl | 5.7 | 5.7 | 5.7 | 5.7 | 5.7 |
| Sugar | 5.3 | 5.3 | 5.3 | 5.3 | 5.3 |
| Native starch ² | 2.0 | 2.0 | 2.0 | 2.0 | 2.0 |
| Seasoning mix ³ | 20.5 | 20.5 | 20.5 | 20.5 | 20.5 |
| Herbs and vegetable pieces ⁴ | 0.5 | 0.5 | 0.5 | 0.5 | 0.5 |
| Aqueous cellulose fibre dispersion ⁵ | 28.5 | | | 28.5 | 28.5 |
| Aqueous agar solution ⁶ | | 28.5 | | | |
| Aqueous gellan gum solution ⁷ | | | 28.5 | | |
| Glucose syrup ⁸ | | | | 28.5 | |
| Water | | | | | 28.5 |
| | | | | | |
| mol Na⁺ + K⁺ per 100 g water | 0.6 | 0.6 | 0.6 | 2.6 | 0.6 |

| | | | | | |
|---|---|---|---|---|---|
| ¹ As in Example 1. ² As in Example 1. ³ As in Example 1. ⁴ As in Example 1. ⁵ Solution contains 2 wt.% cellulose fibre (HerbaFoods, Herbacell AQ+) ⁶ Solution contains 2 wt.% agar (Algamar agar, type 800) ⁷ Solution contains 1 wt.% gellan gum (CP Kelco, LT-100) ⁸ Syrup contains 22 wt.% water (Cargill, C+ Sweet) | | | | | |

The fat blend used in example 2 was prepared as described in example 1.

The structured aqueous phase of example 2.1 was prepared by slowly adding 2 grams of cellulose fibre powder to 98 grams of room temperature tap water, per 100 grams of structured water prepared. The powder was homogeneously dispersed in the water using a Silverson high shear mixer, operating at 4000 rpm while adding the cellulose fibre powder. After powder addition was finished, the dispersion was mixed at 7000 rpm for 10 minutes. The resulting viscous cellulose fibre dispersion was mixed with the paste within 4 hours after finishing the high shear treatment.

The final paste of example 2.1 was prepared as described in example 1.

The structured aqueous phase of example 2.2 was prepared by adding 2 grams of agar powder to 98 grams of room temperature tap water, per 100 grams of structured water prepared. The water and agar powder were mixed in a Thermomix (Vorwerk) applying mixing speed 3 while heating the water and gums mixture to at least 85 °C (temperature set to 90 °C). This hot aqueous mixture was transferred to a double walled vessel which was temperature controlled at 85 °C, from which the hot solution was pumped into a surface scraped heat exchanger. The pump speed was set to deliver a throughput of 39 g/min, the SSHE was set to rotate at 800 rpm at a temperature of 8 °C, leading to a sheared gel evacuation temperature of around 15 °C. The resulting sheared gel was collected, stored in the fridge and used within 24 hours. The final paste of example 2.2 was prepared as described in example 1.

The structured aqueous phase of example 2.3 was prepared by adding 1 gram of gellan gum powder to 99 grams of room temperature tap water, per 100 grams of structured water prepared. The water and gellan gum powder were mixed in a Thermomix (Vorwerk) applying mixing speed 3 while heating the water and gums mixture to at least 85 °C (temperature set to 90 °C). This hot aqueous mixture was transferred to a double walled vessel which was temperature controlled at 85 °C, from which the hot solution was pumped into a surface scraped heat exchanger. The pump speed was set to deliver a throughput of 39 g/min, the SSHE was set to rotate at 800 rpm at a temperature of 8 °C, leading to a sheared gel evacuation temperature of around 15 °C. The resulting sheared gel was collected, stored in the fridge and used within 24 hours.

The final paste of example 2.3 was prepared as described in example 1.

In example 2A, the glucose syrup was added instead of a structured aqueous phase when making the final paste.

In example 2B, tap water was added instead of a structured aqueous phase when making the final paste.

The stability of the savoury concentrates, the squeezability and the presence of hard particles were evaluated as described in Example 1. The outcome of these evaluations are summarized in Table 4 (n.a. = not assessed).

**Table 4**

| | **1** | **2** | **3** | **A** | **B** |
|---|---|---|---|---|---|
| Oil exudation | No | No | No | No | No |
| Syneresis | No | No | No | No | Yes |
| Firmness (in g) | 93 | 102 | 81 | 190 | n.a. |
| Squeezable ¹ | 1,333 | 1,312 | 1,084 | 3,516 | n.a. |
| Hard particles ² | 1 | 1 | 1 | 4 | n.a. |
| Water activity | 0.75 | 0.76 | 0,74 | 0.53 | n.a. |
| Conductivity (µS/cm) | 43 | 8,500 | 15,900 | 0.2 | n.a. |

| | | | | | |
|---|---|---|---|---|---|
| ¹ Measured as steady state forward extrusion force (in g) ² Scored on a scale of 0-5. Score 5 means many perceptible hard particles. Score 0 means no perceptible hard particles | | | | | |

### Example 3

Four different savoury concentrates were prepared on the basis of the recipes shown in Table 5.

**Table 5**

| | **1** | **2** | **3** | **A** |
|---|---|---|---|---|
| Fat blend ¹ | 41.7 | 41.7 | 41.7 | 42.4 |
| NaCl | 5.3 | 5.3 | 5.3 | 5.4 |
| KCl | 7.1 | 7.1 | 7.1 | 7.2 |
| Sugar | 6.7 | 6.7 | 6.7 | 6.8 |
| Native starch ² | 2.5 | 2.5 | 2.5 | 2.5 |
| Seasoning mix ³ | 25.7 | 25.7 | 25.7 | 26.1 |
| Herbs and vegetable pieces ⁴ | 0.6 | 0.6 | 0.6 | 0.6 |
| Aqueous agar solution ⁵ | 10.4 | | | |
| Aqueous gellan gum solution ⁶ | | 10.4 | | |
| Aqueous gelatine solution ⁷ | | | 10.4 | |
| Glucose syrup ⁸ | | | | 9.0 |
| | | | | |
| mol Na⁺ + K⁺ per 100 g water | 2.0 | 2.0 | 2.0 | 10.4 |

| | | | | |
|---|---|---|---|---|
| ¹ As in Example 1. ² As in Example 1. ³ As in Example 1. ⁴ As in Example 1. ⁵ As in example 2. ⁶ As in example 2. ⁷ Solution contains 2 wt.% gelatine (Gelita, pig skin, type A, 250 Bloom) ⁸ As in example 2. | | | | |

The structured aqueous phase of example 3.3 was prepared by adding 2 grams of gelatine powder to 98 grams of room temperature tap water. The water and gelatine powder were mixed in a Thermomix (Vorwerk) applying mixing speed 3 while heating the mixture to 65 °C (temperature set to 70 °C). This hot aqueous mixture was transferred to a double walled vessel which was temperature controlled at 65 °C, from which the hot solution was pumped into a surface scraped heat exchanger. The pump speed was set to deliver a throughput of 39 g/min, the SSHE was set to rotate at 800 rpm at a temperature of 8 °C, leading to a sheared gel evacuation temperature of around 15 °C. The resulting sheared gel was collected, stored in the fridge and used within 24 hours.

The final paste of example 3.3 was prepared as described in example 1.

In example 3A, the glucose syrup was added instead of a structured aqueous phase when making the final paste.

The stability of the savoury concentrates, the squeezability and the presence of hard particles were evaluated as described in Example 1. The outcome of these evaluations are summarized in Table 6 (n.a. = not assessed).

**Table 6**

| | **1** | **2** | **3** | **A** |
|---|---|---|---|---|
| Oil exudation | No | No | No | No |
| Syneresis | No | No | No | No |
| Firmness (in g) | 221 | 133 | 184 | 436 |
| Squeezable ¹ | 4,442 | 1,942 | 3,665 | 4,889 |
| Hard particles ² | 2 | 2 | 2 | 5 |
| Water activity | 0.65 | 0.64 | 0.64 | 0.46 |
| Conductivity (µS/cm) | 42 | 54 | 16 | 0.2 |

| | | | | |
|---|---|---|---|---|
| ¹ Measured as steady state forward extrusion force (in g) ² Scored on a scale of 0-5. Score 5 means many perceptible hard particles. Score 0 means no perceptible hard particles | | | | |

### Example 4

Three different savoury concentrates were prepared on the basis of the recipes shown in Table 7.

**Table 7**

| | **1** | **2** | **A** | **B** |
|---|---|---|---|---|
| Fat blend ¹ | 28.4 | 23.3 | 28.4 | 46.7 |
| NaCl | 3.6 | 5.9 | 3.6 | 6.0 |
| KCl | 4.8 | 7.9 | 4.8 | 7.9 |
| Sugar | 4.6 | 7.4 | 4.6 | 7.4 |
| Native starch ² | 1.7 | 2.8 | 1.7 | 2.8 |
| Seasoning mix ³ | 17.5 | 28.7 | 17.5 | 28.8 |
| Herbs and vegetable pieces ⁴ | 0.4 | 0.7 | 0.4 | 0.4 |
| Xanthan gum + locust bean gum solution ⁵ | 39.0 | 23.3 | | |
| Water | | | 39.0 | |
| | | | | |
| mol Na⁺ + K⁺ per 100 g water | 0.37 | 1.01 | 0.36 | 335 |

| | | | | |
|---|---|---|---|---|
| ¹ As in Example 1. ² As in Example 1. ³ As in Example 1. ⁴ As in Example 1. ⁵ As in example 1. | | | | |

The stability of the savoury concentrates, the squeezability and the presence of hard particles were evaluated as described in Example 1. The outcome of these evaluations are summarized in Table 8 (n.a. = not assessed).

**Table 8**

| | **1** | **2** | **A** | **B** |
|---|---|---|---|---|
| Oil exudation | No | No | No | No |
| Syneresis | No | No | Yes | No |
| Firmness (in g) | 115 | 361 | n.a. | 189 |
| Squeezable ¹ | 1,555 | 5,276 | n.a. | 3,853 |
| Hard particles ² | 0 | 1 | n.a. | 5 |
| Water activity | 0.85 | 0.69 | n.a. | 0.38 |
| Conductivity (µS/cm) | 20,000 | 6,000 | n.a. | 0.4 |

| | | | | |
|---|---|---|---|---|
| ¹ Measured as steady state forward extrusion force (in g) ² Scored on a scale of 0-5. Score 5 means many perceptible hard particles. Score 0 means no perceptible hard particles | | | | |

## Claims

1. An oil-continous savoury concentrate comprising:
• 24-85 wt.% of fat by weight of the total concentrate, said fat having a solid fat content at 20°C (N₂₀) of at least 2wt% (the solid fat is expressed as wt% by weight of the total amount of fat in the savoury concentrate);
• 8-50 wt.% of water by weight of the total concentrate;
• 0.1-20wt% of water structuring agent by weight of the amount of water in the concentrate;
• 0.2-3 mol per 100 g of water of alkalimetal cation selected from Na⁺, K⁺ and combinations thereof;
• 0.2-3 mol chloride anion per 100 g of water;
wherein fat and water are present in a weight/weight ratio fat to water of at least 2:3, preferably of at least 3:4.

2. Savoury concentrate according to claim 1 having a consistency that allows it to be squeezed out of a pouch, preferably the savoury concentrate can be extruded with a steady-state force between 100 and 10,000 g.

3. Savoury concentrate according to claim 1 or 2, wherein the combination of fat and water represents at least 40 wt.% by weight of the total concentrate.

4. Savoury concentrate according to any one of the preceding claims, wherein fat and water are present in the savoury concentrate in a weight/weight ratio of fat to water of at least 1:1.

5. Savoury concentrate according to any one of the preceding claims, wherein the water-structuring agent is selected from the group of agar, pectins, xanthan gum, gellan gum, galactomannans, glucomannans, gelatins, maltodextrins, inulins, cellulose fibres and combinations thereof.

6. Savoury concentrate according to any one of the preceding claims, wherein the concentrate has a water activity of 0.5-0.9, more preferably from 0.55-0.85, most preferably between 0.60 and 0.80.

7. Savoury concentrate according to any one of the preceding claims, wherein the fat has a solid fat content at 20°C (N₂₀) of at least 5wt% as wt% by weight of the total amount of fat in the savoury concentrate .

8. Savoury concentrate according to any one of the preceding claims, wherein the concentrate contains 0-30 wt% of native starch by weight of the total concentrate.

9. Savoury concentrate according to any one of the preceding claims comprising,
• 30-55 wt.% of fat by weight of the total concentrate, said fat having a solid fat content at 20°C (N20) of at least 5 wt% (the solid fat is expressed as wt% by weight of the total amount of fat in the savoury concentrate);
• 15-35 wt.% of water by weight of the total concentrate;
• 1-5wt% of water structuring agent by weight of the amount of water in the concentrate;
• 0.5-2 mol per 100 g of water of alkalimetal cation selected from Na+, K+ and combinations thereof;
• 0.5-2 mol chloride anion per 100 g of water;
• wherein fat and water are present in a weight/weight ratio fat to water of 1.2:1 to 4:1;
• wherein said concentrate has a water activity of 0.6-0.8 and
• wherein said concentrate has a consistency that allows it to be squeezed out of a pouch, preferably the savoury concentrate can be extruded with a steady-state force between 700 and 3,000 g.

10. A process of preparing a savoury concentrate according to any one of the preceding claims, said process comprising the successive steps of:
• providing a structured aqueous composition containing 0.1-20% of water structuring agent by weight of water in the concentrate;
• mixing the structured aqueous composition with fat and optional further components.

11. Process according to claim 10, wherein the structured aqueous composition that is mixed with the fat and the optional further components is a gelled aqueous phase.

12. Process according to claim 11, wherein the gelled aqueous phase is subjected to shear before it is mixed with the fat and the optional further components.

13. Process according to claim 10, wherein the structured aqueous composition that is mixed with the fat and the optional further components contains 0.2-10 wt.% of cellulose fibres by weight of water in the concentrate.

14. Process according to any one of claims 10-13, wherein the structured aqueous composition that is mixed with the fat and the optional further components contains 0.2-3 mol per 100 g water of alkalimetal cation selected from Na+, K+ and combinations thereof; and 0.2-3 mol per 100 g water of chloride anion.

15. Process according to any one of claims 10-14, wherein the optional further components include tissue-based food particles having a mesh size in the range of 0.1-10 mm, said tissue-based food particles containing one or more edible materials selected from vegetables, herbs, spices, fruit, nuts, grains, meat and combinations thereof.

## Patentansprüche

1. Öl-kontinuierliches schmackhaftes Konzentrat, umfassend:
• 24-85 Gew.-% Fett, bezogen auf das Gewicht des gesamten Konzentrats, wobei das Fett bei 20°C einen Festfettgehalt (N₂₀) von mindestens 2 Gew.-% aufweist (das feste Fett wird in Gew.-% ausgedrückt, bezogen auf das Gewicht der gesamten Menge des Fetts in dem schmackhaften Konzentrat);
• 8-50 Gew.-% Wasser, bezogen auf das Gewicht des gesamten Konzentrats;
• 0,1-20 Gew.-% Wasserstrukturierungsmittel, bezogen auf das Gewicht der Menge des Wassers in dem Konzentrat;
• 0,2-3 mol pro 100 g Wasser Alkalimetallkation, ausgewählt aus Na⁺, K⁺ und Kombinationen davon;
• 0,2-3 mol Chloridanion pro 100 g Wasser,
wobei Fett und Wasser in einem Verhältnis Gewicht/Gewicht von Fett zu Wasser von mindestens 2:3, vorzugsweise mindestens 3:4, vorliegen

2. Schmackhaftes Konzentrat nach Anspruch 1, das eine Konsistenz aufweist, die es ihm ermöglicht, aus einem Beutel gepresst zu werden, wobei das schmackhafte Konzentrat vorzugsweise mit einer stationären Kraft zwischen 100 und 10.000 g extrudiert werden kann.

3. Schmackhaftes Konzentrat nach Anspruch 1 oder 2, wobei die Kombination von Fett und Wasser mindestens 40 Gewichts-%, bezogen auf das Gewicht des gesamten Konzentrats, darstellt.

4. Schmackhaftes Konzentrat nach irgendeinem der vorhergehenden Ansprüche, wobei Fett und Wasser in dem schmackhaften Konzentrat in einem Verhältnis Gewicht/Gewicht von Fett zu Wasser von mindestens 1:1 vorliegen.

5. Schmackhaftes Konzentrat nach irgendeinem der vorhergehenden Ansprüche, wobei das Wasserstrukturierungsmittel aus der Gruppe von Agar, Pektin, Xanthangummi, Gellangummi, Galactomannanen, Glucomannanen, Gelatinen, Maltodextrinen, Inulinen, Cellulosefasern und Kombinationen davon ausgewählt ist.

6. Schmackhaftes Konzentrat nach irgendeinem der vorhergehenden Ansprüche, wobei das Konzentrat eine Wasseraktivität von 0,5-0,9, bevorzugt von 0,55-0,85, höchst bevorzugt zwischen 0,60 und 0,80, aufweist.

7. Schmackhaftes Konzentrat nach irgendeinem der vorhergehenden Ansprüche, wobei das Fett bei 20°C einen Festfettgehalt (N₂₀) von mindestens 5 Gew.-%, als Gew.-% bezogen auf das Gewicht der gesamten Menge des Fetts in dem schmackhaften Konzentrat, aufweist.

8. Schmackhaftes Konzentrat nach irgendeinem der vorhergehenden Ansprüche, wobei das Konzentrat 0-30 Gew.-% native Stärke, bezogen auf das Gewicht des gesamten Konzentrats, enthält.

9. Schmackhaftes Konzentrat nach irgendeinem der vorhergehenden Ansprüche, umfassend
• 30-55 Gew.-% Fett, bezogen auf das Gewicht des gesamten Konzentrats, wobei das Fett bei 20°C einen Festfettgehalt (N₂₀) von mindestens 5 Gew.-% aufweist (das feste Fett wird in Gew.-% ausgedrückt, bezogen auf das Gewicht der gesamten Menge des Fetts in dem schmackhaften Konzentrat);
• 15-35 Gew.-% Wasser, bezogen auf das Gewicht des gesamten Konzentrats;
• 1-5 Gew.-% Wasserstrukturierungsmittel, bezogen auf das Gewicht der Menge des Wassers in dem Konzentrat;
• 0,5-2 mol pro 100 g Wasser Alkalimetallkation, ausgewählt aus Na⁺, K⁺ und Kombinationen davon;
• 0,5-2 mol Chloridanion pro 100 g Wasser;
• wobei Fett und Wasser in einem Verhältnis Gewicht/Gewicht von Fett zu Wasser von 1,2:1 bis 4:1 vorliegen;
• wobei das Konzentrat eine Wasseraktivität von 0,6-0,8 aufweist und
• wobei das Konzentrat eine Konsistenz aufweist, die es ihm ermöglicht, aus einem Beutel gepresst zu werden, wobei das schmackhafte Konzentrat vorzugsweise mit stationärer Kraft zwischen 700 und 3.000 g extrudiert werden kann.

10. Verfahren zur Herstellung eines schmackhaften Konzentrats nach irgendeinem der vorhergehenden Ansprüche, wobei das Verfahren die aufeinanderfolgenden Schritte umfasst:
• Bereitstellen einer strukturierten wässrigen Zusammensetzung, die 0,1-20% Wasserstrukturierungsmittel, bezogen auf das Gewicht des Wassers in dem Konzentrat, enthält;
• Mischen der strukturierten wässrigen Zusammensetzung mit Fett und optionalen weiteren Bestandteilen.

11. Verfahren nach Anspruch 10, wobei die strukturierte wässrige Zusammensetzung, die mit dem Fett und den optionalen weiteren Bestandteilen gemischt wird, eine gelierte wässrige Phase darstellt.

12. Verfahren nach Anspruch 11, wobei die gelierte wässrige Phase einer Scherung unterworfen wird, bevor sie mit dem Fett und den optionalen weiteren Bestandteilen gemischt wird.

13. Verfahren nach Anspruch 10, wobei die strukturierte wässrige Zusammensetzung, die mit dem Fett und den optionalen weiteren Bestandteilen gemischt wird, 0,2-10 Gew.-% Cellulosefasern, bezogen auf das Gewicht vom Wasser in dem Konzentrat, enthält.

14. Verfahren nach irgendeinem der Ansprüche 10-13, wobei die strukturierte wässrige Zusammensetzung, die mit dem Fett und den optionalen weiteren Bestandteilen gemischt wird, 0,2-3 mol pro 100 g Wasser Alkalimetallkation, ausgewählt aus Na⁺, K⁺ und Kombinationen davon, und 0,2-3 mol pro 100 g Wasser Chloridanion enthält.

15. Verfahren nach irgendeinem der Ansprüche 10-14, wobei die optionalen weiteren Bestandteile Nahrungsmittelpartikel auf Gewebebasis mit einer Siebgröße in dem Bereich von 0,1-10 mm enthalten, wobei die Lebensmittelteilchen auf Gewebebasis ein oder mehrere essbare Materialien, ausgewählt unter Gemüse, Kräutern, Gewürzen, Früchten, Nüssen, Körnern, Fleisch und Kombinationen davon, enthalten.

## Revendications

1. Concentré savoureux continu dans l'huile comprenant :
. 24-85 % en masse de graisse en masse du concentré total, ladite graisse présentant une teneur en graisse solide à 20°C (N₂₀) d'au moins 2 % en masse (la graisse solide est exprimée comme % en masse de la quantité totale de graisse dans le concentré savoureux) ;
. 8-50 % en masse d'eau en masse du concentré total ;
. 0,1-20 % en masse d'agent structurant l'eau en masse de la quantité d'eau dans le concentré ;
. 0,2-3 mol pour 100 g d'eau de cations de métal alcalin choisi parmi Na⁺, K⁺ et des combinaisons de ceux-ci ;
. 0,2-3 mol d'anion chlorure pour 100 g d'eau ;
dans lequel la graisse et l'eau sont présents dans un rapport masse/masse de graisse à eau d'au moins 2:3, de préférence d'au moins 3:4.

2. Concentré savoureux selon la revendication 1 présentant une consistance qui lui permet d'être extrait d'une poche, de préférence le concentré savoureux peut être extrudé avec une force à l'état permanent de 100 à 10 000 g.

3. Concentré savoureux selon la revendication 1 ou 2, dans lequel la combinaison de graisse et d'eau représente au moins 40 % en masse du concentré total.

4. Concentré savoureux selon l'une quelconque des revendications précédentes, dans lequel la graisse et l'eau sont présentes dans le concentré savoureux dans un rapport masse/masse de graisse à eau d'au moins 1:1.

5. Concentré savoureux selon l'une quelconque des revendications précédentes, dans lequel l'agent structurant l'eau est choisi dans le groupe d'agar, pectines, gomme xanthane, gomme gellane, galactomannanes, glucomannanes, gélatines, maltodextrines, inulines, fibres de cellulose et combinaisons de ceux-ci.

6. Concentré savoureux selon l'une quelconque des revendications précédentes, dans lequel le concentré présente une activité d'eau de 0,5-0,9, encore mieux de 0,55-0,85, bien mieux encore de 0,60 à 0,80.

7. Concentré savoureux selon l'une quelconque des revendications précédentes, dans lequel la graisse présente une teneur en graisse solide à 20°C (N₂₀) d'au moins 5 % en masse comme % en masse de la quantité totale de graisse dans le concentré savoureux.

8. Concentré savoureux selon l'une quelconque des revendications précédentes, dans lequel le concentré contient 0-30 % en masse d'amidon natif en masse du concentré total.

9. Concentré savoureux selon l'une quelconque des revendications précédentes, comprenant,
▪ 30-55 % en masse de graisse en masse du concentré total, ladite graisse présentant une teneur en graisse solide à 20°C (N₂₀) d'au moins 5 % en masse (la graisse solide est exprimée comme % en masse de la quantité totale de graisse dans le concentré savoureux) ;
▪ 15-35 % en masse d'eau en masse du concentré total ;
▪ 1-5 % en masse d'agent structurant l'eau en masse de la quantité d'eau dans le concentré ;
▪ 0,5-2 mol pour 100 g d'eau de cation de métal alcalin choisi parmi Na⁺, K⁺ et des combinaisons de ceux-ci ;
▪ 0,5-2 mol d'anion chlorure pour 100 g d'eau ;
▪ dans lequel la graisse et l'eau sont présentes dans un rapport masse/masse de graisse à eau de 1,2:1 à 4:1 ;
▪ dans lequel ledit concentré présente une activité d'eau de 0,6-0,8 et
▪ dans lequel ledit concentré présente une consistance qui lui permet d'être extrait d'une poche, le concentré savoureux peut être de préférence extrudé avec une force à l'état permanent de 700 à 3 000 g.

10. Procédé de préparation d'un concentré savoureux selon l'une quelconque des revendications précédentes, ledit procédé comprenant les étapes successives de :
▪ fourniture d'une composition aqueuse structurée contenant 0,1-20 % d'agent structurant l'eau en masse d'eau dans le concentré ;
▪ mélange de la composition aqueuse structurée avec de la graisse et éventuellement des constituants supplémentaires.

11. Procédé selon la revendication 10, dans lequel la composition aqueuse structurée qui est mélangée avec la graisse et les autres constituants éventuels est une phase aqueuse gélifiée.

12. Procédé selon la revendication 11, dans lequel la phase aqueuse gélifiée est soumise à un cisaillement avant qu'elle soit mélangée avec la graisse et les autres constituants éventuels.

13. Procédé selon la revendication 10, dans lequel la composition aqueuse structurée qui est mélangée avec la graisse et les autres constituants éventuels contient 0,2-10 % en masse de fibres de cellulose en masse d'eau dans le concentré.

14. Procédé selon l'une quelconque des revendications 10-13, dans lequel la composition aqueuse structurée qui est mélangée avec la graisse et les autres constituants éventuels contient 0,2-3 mol pour 100 g d'eau de cation de métal alcalin choisi parmi Na⁺, K⁺ et des combinaisons de ceux-ci ; et 0,2-3 mol pour 100 g d'eau d'anion chlorure.

15. Procédé selon l'une quelconque des revendications 10-14, dans lequel les autres constituants éventuels comprennent des particules d'aliments à base de tissus présentant une taille de maille dans l'intervalle de 0,1-10 mm, lesdites particules d'aliments à base de tissus contenant un ou plusieurs matériaux comestibles choisis parmi des légumes, des herbes, des épices, des fruits, des noix, des graines, de la viande et des combinaisons de ceux-ci.
